# EUROPEAN PATENT APPLICATION

(11) **EP 4 368 440 A1**
(43) Date of publication of application: **15.05.2024**
(21) Application number: 21949172.7
(22) Date of filing: 07.07.2021
(51) Int. Cl.: B60L 7/26, B60L 7/28, H02K 7/18, H02K 49/04

(54) **POWER SUPPLY SYSTEM FOR A RETARDER OF A VEHICLE, AUTONOMOUS RETARDER AND METHOD FOR MAKING A RETARDER AUTONOMOUS**

(71) Applicant: Ralentizadores Y Transformaciones, S.A., 28850 Torrejón de Ardoz (Madrid) (ES)
(72) Inventor: CARBALLO RODRIGUEZ, Pablo, 28850 Torrejón de Ardoz (ES)
(74) Representative: Clarke, Modet y Cía., S.L.
(86) International application number: PCT/ES2021/070492
(87) International publication number: WO 2023/281128

(57) **Abstract**

Power supply system for a retarder of a vehicle, autonomous retarder and method for making a retarder autonomous. The power supply system (1) is for a retarder (10) comprising two rotors (11) attached to a rotation shaft (32) and a stator (12) located between the rotors (11), supported on bearings (33) coupled to the shaft (32). In the retarder (10) the modified flange (15) of new design has to be arranged. The power supply system (1) comprises a generator (20), with a rotor assembly (21) and a stator (22) for supplying electrical power to the retarder. The modified flange (15) is mounted on the retarder (10) to which the rotor assembly (21) of the generator (20) is attached, thus unifying the kinematic chain of the generator with that of the retarder.

## Description

### Field of the invention

The invention belongs to the field of automotive braking systems, more specifically it corresponds to electromagnetic braking systems using eddy currents as a principle. These braking systems require electrical power and operate without wear or friction.

### Prior art

Electromagnetic retarders generally consist of a central stator and two end rotors, one on each side of the stator. Its operation is based on the variation of the mechanical resistance offered by the rotors as they rotate in a magnetic field. The magnetic field is created by a number of electromagnets fixed in a enclosure and evenly distributed. These retarders require electrical power to supply current to the coils that form the electromagnets attached to the stator. The power supply is usually provided by batteries incorporated in the vehicles where these retarders are installed. The requirements for these batteries are demanding as the amount of current needed is high to the point where prolonged use of the retarder causes a voltage drop in the batteries. This voltage drop forces to reduce the retarder power and even to disconnect the retarder.

### Brief description of the invention

It is an object of the invention a power supply system for a retarder of a vehicle which solves or at least mitigates the problems and limitations observed in the prior art in accordance with the first independent claim. So is a set of steps according to the method independent claim that allows to make a retarder autonomous by mounting at least one generator.

The power system is coupled to a retarder that includes a central stator and two side rotors. Each side rotor is located externally on a different side of the stator. The power supply system includes at least one generator that is coupled to the retarder via coupling means. The generator comprises a rotor and stator assembly. The coupling of one or more generators in the retarder achieves a compact assembly. Thanks to the generator, the retarder is autonomous by providing itself with the electrical energy it needs for its operation.

The generator can also be configured so that, in addition to supplying power to the retarder, it can supply power to batteries. These batteries accumulate reserve energy and improve energy utilization.

Preferably, the generator stator includes a series of coils and the generator rotor assembly includes a series of permanent magnets arranged with alternating polarity. In operation, the rotor assembly, acting as an inductor, generates a magnetic flux so that the stator, acting as an armature, transforms the magnetic flux into electricity in this configuration.

The coupling includes assembling non-moving parts. The generator stator is fixed to the retarder stator by means of arms that act as a rigid connection between the two.

Coupling also includes assembling moving parts. For the moving parts there is a new flange of new design located at the end of the retarder that apart from fixing the cardan transmission of the vehicle, gives origin to the kinematic chain of the generator, with this configuration, both the retarder rotors and the generator rotor, rotate at the same time on the same shaft. The generator rotor is a robust and dynamically balanced component, preferably made of cast aluminum or non-magnetic stainless steel. The permanent magnets that form the polar masses are assembled on their surface, positioned equidistant and with magnetically alternating poles. For the integration of the generator rotor to the rotating part of the retarder, the generator rotor is preferably mounted to a rotor holder bushing by means of keys and Seeger type washers, thus forming the generator rotor assembly which is fixed to the output flange mounted on the retarder by means of screws.

The stator of the generator is preferably constituted by an armature formed by a set of magnetic steel sheets in the form of a circular crown, assembled and electrically insulated from each other. In its inner perimeter there are grooves where the induced coils are housed. Externally, other slots are arranged for coupling and assembly in an aluminum enclosure that with its external cover closes the assembly.

The components that allow the assembly of the generator to the retarder, as well as the generator itself, are preferably of new design, with the particularity that it is free of bearings because it shares those of the retarder. It should be noted that, advantageously, the operation of the whole assembly does not alter the functional and cooling technical characteristics of the retarder or the generator.

Optionally, the power system includes a control module to control the generator excitation current according to a control signal. Optionally, the control module includes a rectifier and a voltage stabilizer.

Thanks to the assembly and configuration, the power system is compact. It is also more versatile, since it can be sized for one or more generators and it can be established how they should be to supply the necessary power to the retarder and/or additional elements that require it. For example, the power system can store energy in batteries for use by various elements of the vehicle.

It is further another object of the invention an autonomous retarder including a retarder with power supply system, as well as a method for converting a non-autonomous retarder into an autonomous retarder for a vehicle.

### Brief description of the drawings

FIGURE 1: Exploded view of an embodiment of the power supply system with a generator.
FIG. 2: Sectional representation of FIG. 1.
FIG. 3: Detailed representation, in section, of an assembly sequence of the generator to the retarder powertrain.
FIG. 4: Sectional view of the generator rotor attached to the rotor case (rotor holder) and the new retarder output flange.
FIG. 5: Representation in section A-A of several rotating elements of the system with double generator.
FIG. 6: Representation in section A-A of several static elements of the system with double generator.
FIG. 7: Representation in section A-A of the complete system with incorporated double generator and cardan transmissions of the vehicle.
FIGs. 8A-8G: Sequence of steps to transform a vehicle-mounted retarder into a stand-alone retarder with two generators.
FIGs. 9A-9C: Three-dimensional representation of an embodiment of a retarder with integrated power supply system for installation on a vehicle chassis.

### NUMERICAL REFERENCES

1 Power supply system.
10 Retarder.
11 Retarder rotors.
12 Retarder stator.
13 attachment arm (from generator stator to retarder stator).
15 Modified flange (new design).
20 Generator.
21 Rotor assembly (rotor holder bushing with generator rotor).
22 Generator stator.
23 Generator rotor.
24 Induction (generator) coils.
25 Rotor holder bushing (for fixing the generator rotor to form the generator rotor assembly).
26 Permanent magnets.
27, 27a, 27b Through holes.
28 Sealing cap (of the generator stator enclosure).
29 Keyways.
31 Cardan transmission of the vehicle
32 rotation shaft.
33 Bearings.
35 Conventional flange (mounted on a retarder without generator).
39 Screw.
40 Support.
41 Silentblock.

### Detailed description of the invention

With reference to the figures, several non-limiting examples of embodiments are described, wherein various advantages and features of the present invention can be appreciated.

It is of interest for industrial vehicles such as trucks, buses, heavy vans, etc.

The incorporation of one or more generators provides the retarder with a power supply that allows it to be autonomous. Generally, not all of the electrical energy generated is used by the retarder. The surplus electrical energy can be stored in batteries or used by other devices in the vehicle that require it, bearing in mind that it may be necessary to adapt to the specifications of each device.

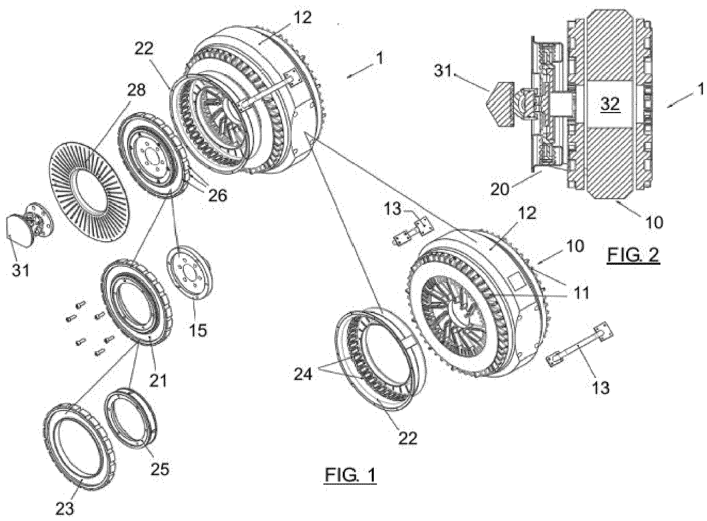

FIG. 1 illustrates a three-dimensional exploded view of one embodiment of the system 1 for installation in a vehicle. The power supply system 1 includes a single permanent magnet generator 20 that is coupled to a retarder 10.

FIG. 2 illustrates a cutaway of the embodiment of FIG. 1 assembled on a cardan transmission 31. Both figures are explained below.

The retarder 10 incorporates two rotors 11, each rotor 11 being positioned on a different side of the stator 12. Both rotors 11 rotate around the same rotation shaft 32 which generally coincides with the cardan transmission 31 of the vehicle.

### Generator coupling:

The retarder 10 is to have the newly designed modified flange 15 mounted. The stator 22 of the generator 20 must be attached to the stator 12 of the retarder 10 through the attachment arms 13. Next, the rotor assembly 21 of the generator 20 is mounted to the modified flange 15 with the retarder 10. Subsequently, the sealing cover is mounted, both the stator enclosure and the sealing cover 28 comprises openings for ventilation.

The rotor assembly 21 is formed externally by a rotor 23 which is an annular piece where permanent magnets 26 are mounted, and internally by a bushing 25. The permanent magnets 26 are circumferentially distributed over the rotor 23 and are assembled with magnetically alternating N-S-N poles. The bushing 25 is provided with bores 27 and Seeger rings. The holes 27 are preferably through holes for axially joining the flange 15, for example, with bolts 39. The bushing 25 acts as a carrier for the rotor 23 and also has machined keyways 29. A keyway is defined as an indentation to receive a key and thus prevent the relative movement of the two parts. The keyways 29 with the key fix the bushing 25 and the rotor 23. In order to improve the insulation of the stator 22 of the generator 20 with the external medium, a closing cover 28 with grooves practiced on its surface for cooling is provided, the grooves may be radially distributed.

The generator 20 has a stator 22 where the induction coils 24 are arranged. The stator 22 has a enclosure, preferably made of cast aluminum, where the other end of the attachment arm 13 is attached.

The assembly of the generator 20 with the retarder 10 is accomplished by first attaching the stator 22 of the generator 20, without the locking cap 28, to the stator 12 of the retarder 10, through the attachment arms 13. The length of the attachment arm 13, is calculated to establish an adequate clearance between the generator 20 and retarder 10 that ensures cooling. The attachment arms 13 support the weight of the stator 22 of the generator 20, so that it does not require bearings of its own.

On the other hand, to the bushing 25 is attached the rotor 23 forming the rotor assembly 21 of the generator 20. The rotor assembly 21 is attached to the new modified flange 15 of the retarder 10. Thus, the rotor assembly 21 of the generator 20 is integrated with the rotation shaft 32 of the retarder 10.

Mention that, the mass of the rotor 21 of the generator 20 is much smaller than that of the rotor 11 of the retarder 10. For this purpose, the modified flange 15 of the retarder 10 is provided which allows the rotor assembly 21 to be attached to the rotation shaft 32 of the retarder 10. Likewise, the flange 15 also connects the rotor 11 of the retarder 10 to the rotation shaft 32 through bolts for holes 27b as usual.

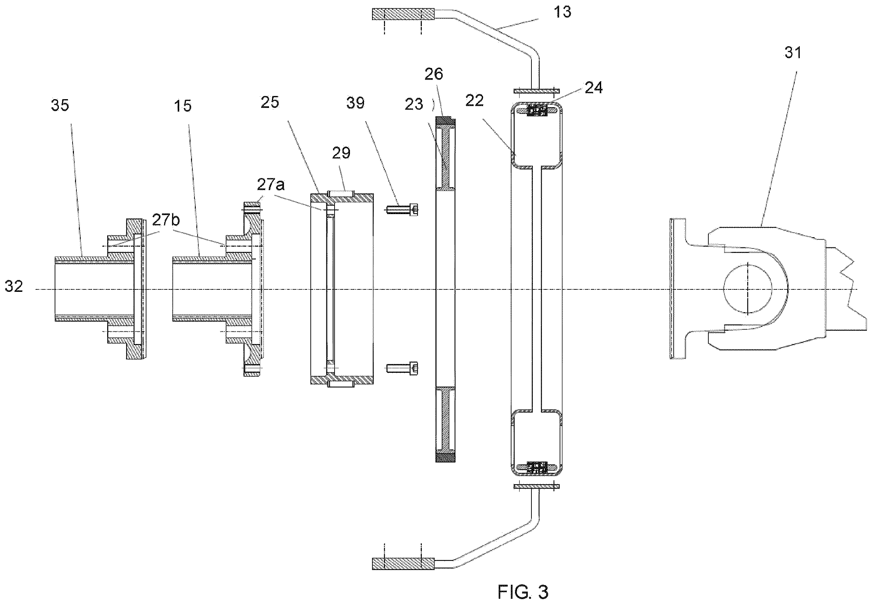

FIG. 3 additionally illustrates the assembly of different parts of a generator 20 with the modified flange 15 and with the end of the vehicle powertrain where the cardan transmission 31 is located on the right.

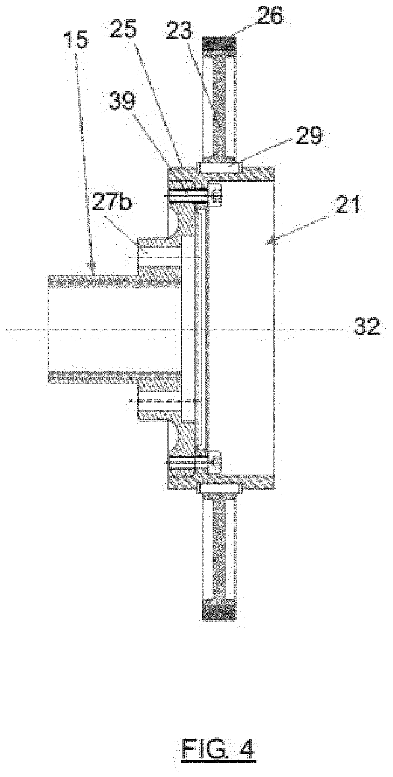

In FIG. 4, a rotor assembly 21 of the generator coupled to the modified flange 15 is illustrated. This figure and the previous one are explained together.

The conventional flange 35 is shown next to the modified flange 15 for better appreciation of the new design made in FIG. 3. The modified flange 15 is provided with through holes 27a and 27b for attaching to it the cardan drive 31 and also attaching to said flange the rotor assembly 21 of the generator 20.

In FIG. 4 it can be seen the permanent magnet poles 26 assembled on the rotor 23 which is coupled with the bushing 25 by means of keyways, thus forming the rotor assembly 21 of the generator 20 (which fit into the keyways 29). Induction coils 24 are mounted on the stator 22 of the generator 20. By means of the attachment arms 13, the stator 22 is fastened to the stator 12 of the retarder 10 (not shown) which would be on the left.

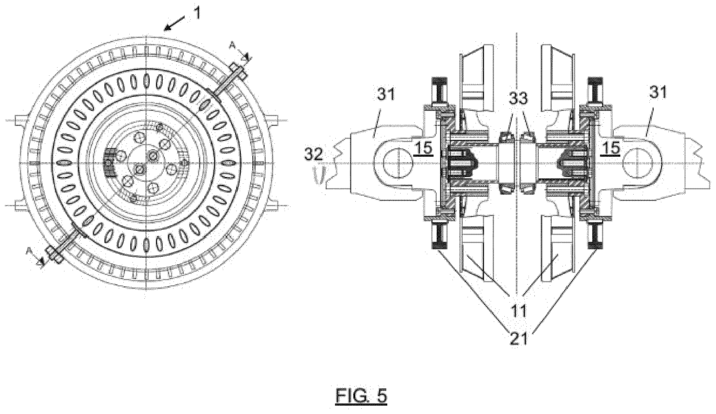

In FIG. 5, are illustrated rotating elements with a section A-A of the system 1 rotating in unison around a rotation shaft 32 of the retarder. The modified flange 15, incorporated in the retarder, is mounted to the generator rotor assembly 21.

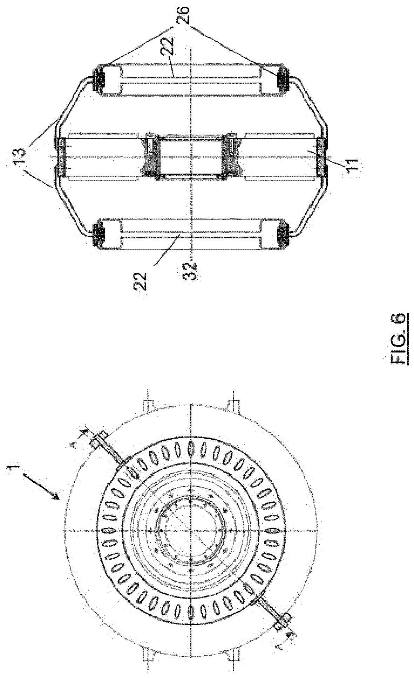

In FIG. 6, the static elements with a section A-A of the system 1 in which it can be seen the fixing of the stators 22 of the generator 20 to the stator 12 of the retarder 10, through four attachment arms 13 made in rigid material and placed in equidistant positions, are illustrated. The attachment arms 13 define a separation between generator 20 and retarder 10

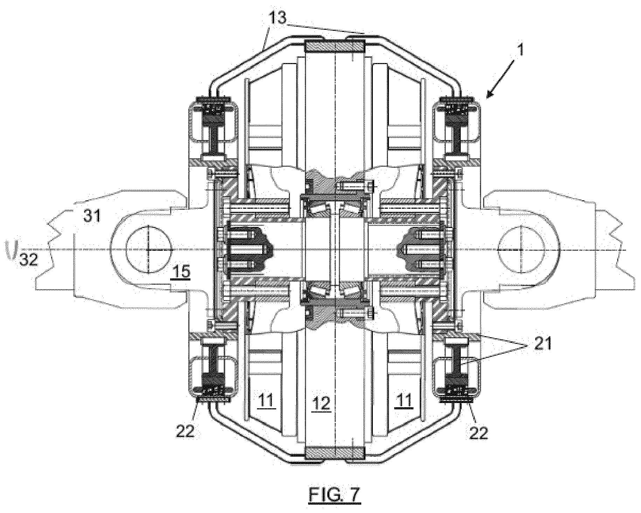

In FIG. 7, the rotating and static elements are illustrated together with an A-A section of system 1. The arrangement of the rotors 11, 21 fixed to each other by the modified flange 15 so that they rotate around the shaft 32 establishing a kinematic chain for the rotor 21 of the generator 20 which rotates in solidarity with the cardan transmission 31 can be seen.

Independently, the stators 12, 22 are observed fixed together by the attachment arms 13 allowing a certain axial clearance for adequate ventilation.

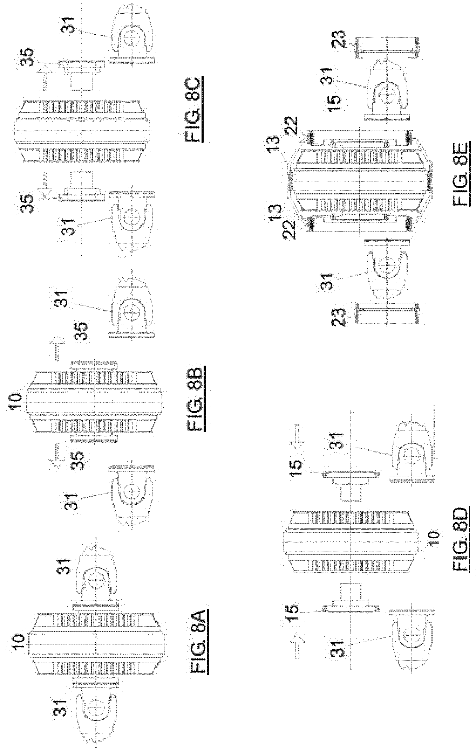

FIG. 8A to FIG. 8G illustrate a schematic assembly sequence for a method for making a vehicle retarder autonomous starting from a conventional retarder to which two generators are incorporated, one generator on one side and one on the opposite side. However, it could be a unique generator.

FIG. 8A shows the initial state with a retarder 10 without generators coupled to the vehicle powertrain via the cardan transmission 31.

FIG. 8B shows the disassembly step of the cardan transmission 31 to release the retarder 10.

FIG. 8C shows the step of removing the original flanges 35 from the retarder 10.

FIG. 8D shows the step of replacing the original flanges 35 with modified flanges 15.

FIG. 8E is shown the step of mounting a stator 22 of a generator 20 to the stator 12 of the retarder 10 with the attachment arms 13. This is done on both sides of the retarder 10 in this embodiment.

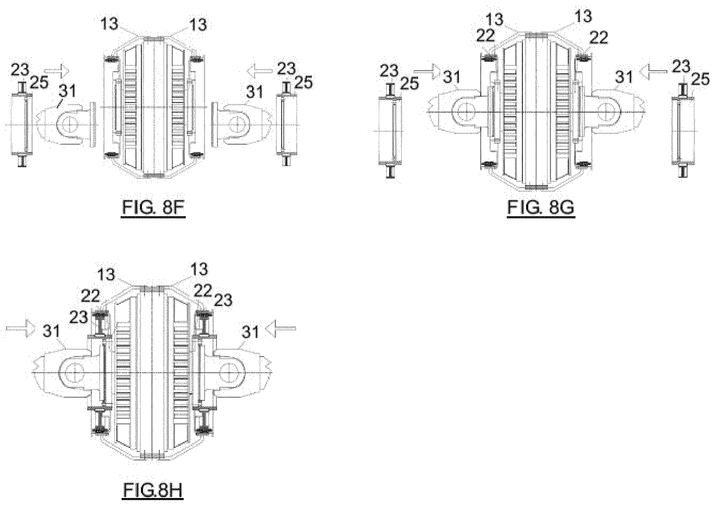

FIG. 8F shows the step of mounting a rotor 23 of a generator 20 to the rotor holder bushing 25 forming the rotor assembly 21.

FIG. 8G shows the mounting step of the cardan transmission 31 of the vehicle to the retarder flange 15.

FIG. 8H shows the step of mounting the rotor assembly 21 of the generator 20 to the retarder flange 15.

As can be seen in the above sequence of figures, the cardan transmission 31 does not need to be replaced or modified.

The described power supply system may include electronic circuits for regulation and monitoring of its operation. For example, it can incorporate a control module that receives as input a control signal related to braking command coming from a main processor of the vehicle. This control signal can be manual or automatic.

The control module can be connected to a control bus for data transmission. For example, it can be a CAN bus (Controller Area Network). Further, the control module can be integrated with other active safety systems of the vehicle. For example, the use of retarder 10 combined with the vehicle brake pedal can be enabled. A separate control can also be incorporated to manually activate the retarder. In both cases, the braking torque regulation can range from zero to one hundred percent of the power available at retarder 10.

The control module can manage voltage regulation. For example, by means of an electronic circuit composed of active and passive components such as thyristors, transistors, diodes, capacitors, resistors, etc. Electrical and electronic components are responsible for sequentially activating or deactivating the power supply to the retarder or batteries.

Both retarder operation and battery charging require direct current. For this purpose, the power supply system may include a rectifier and a regulator. For example, the three-phase alternating current generated in the generator stator is passed to a diode plate of the rectifier, where the current is rectified and becomes direct current. To take advantage of both the positive and negative half-waves of each phase, that is, double or full-wave rectification, two diodes are placed on each phase, one on the positive side and one on the negative side, therefore, six power diodes are necessary. The rectified output current does not correspond to an ideal direct current, since it is of the pulsed type. The ripple of the pulsed three-phase current is further reduced by incorporating a regulator that includes a ripple filter circuit, in order to reduce current amplitude variations and make it as continuous as possible in the load to be fed.

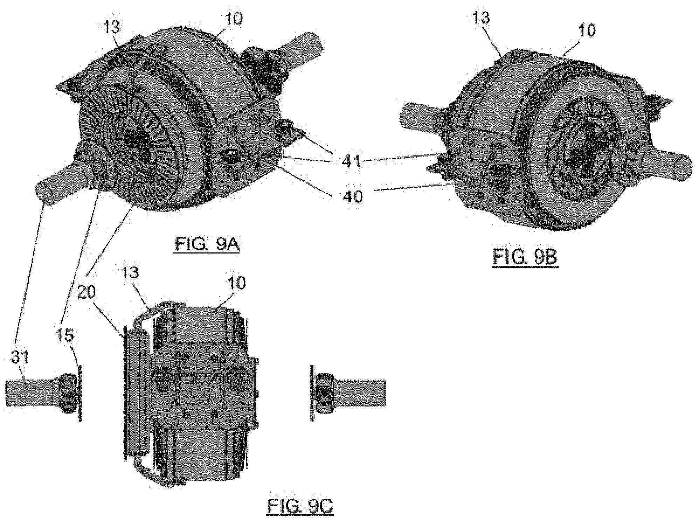

In FIGS. 9A to 9C it can be seen in different views how it would be externally arranged for mounting on a vehicle the retarder 10 incorporating the power supply system 1 with the generator 20 and the attachment arms 13. It can also be seen how it would be attached to the vehicle frame (not shown), where there are brackets 40 with silent blocks 41.

The embodiments described herein provide multiple advantages and benefits. One is compatibility since the operation of the system does not alter the functional or cooling technical characteristics of the retarder or generator. For example, they maintain adequate clearance for cooling air to circulate through each device. For example, the tolerance of the retarder parts is not exceeded by including a generator since the increase in mass is not appreciable. The generator has no bearings of its own and uses retarder bearings instead. Advantageously, the generator is free of collector and brushes.

In a complementary manner, several particular features are mentioned for an embodiment of the present system. The stator of the generator can be constituted by an armature preferably formed by a set of magnetic steel sheets, in the form of a circular crown, assembled and electrically isolated from each other. On its inner perimeter, there are slots to house the armature coils. Further slots are provided on the outside, for coupling and assembly in the enclosure, which with an external cover closes the assembly. It preferably includes three coils connected to each other and, in turn, electrically isolated from the enclosure. These coils are evenly distributed throughout the periphery. The enclosure and the external cover of the stator are preferably made of cast aluminum, with openings and fins to facilitate cooling. On the other hand, the generator rotor is preferably made of cast aluminum or non-magnetic stainless steel.

## Claims

1. A power supply system (1) for a retarder (10) of a vehicle, wherein the retarder (10) comprises two rotors (11) are attached to a rotation shaft (32) and a stator (12) located between the rotors (11), wherein the stator (12) is supported on bearings (33) coupled with the rotation shaft (32), wherein the power supply system (1) comprises:
at least one generator (20) configured to supply electrical power to the retarder (10), wherein the generator (20) comprises a rotor assembly (21); and a stator (22) comprising a plurality of induction coils (24);
**characterized in that** the power supply system (1) comprises:
a modified flange (15) connecting a first rotor (11) of the retarder (10) with the rotation shaft (32) and with the rotor assembly (21) of the generator (20) to simultaneously rotate the rotor assembly (21) of the generator (20), the rotation shaft (32) and the first rotor (11) of the retarder (10);
a plurality of attachment arms (13) joining and supporting the stator (22) of the generator (20) to the stator (12) of the retarder (10) maintaining a separation distance.

2. A power supply system (1) according to claim 1 comprising a second generator (20) configured to supply electrical power to the retarder (10), a second modified flange (15) and a plurality of second attachment arms (13); wherein the second generator (20) comprises a rotor assembly (21) and a stator (22); wherein a second modified flange (15) connecting second rotor (11) of the retarder (10) with the rotation shaft (32) and with the rotor assembly (21) of the second generator (20) to simultaneously rotate the rotor assembly (21) of the generator (20), the rotation shaft (32) and the second rotor (11) of the retarder (10); wherein a plurality of second attachment arms (13) join and support the stator (22) of the second generator (20) with the stator (12) of the retarder (10) maintaining a separation distance.

3. Power supply system (1) according to claim 1 or 2, wherein the rotor assembly (21) of the generator (20) comprises a rotor (23) and a bushing (25), wherein the rotor (23) mounts a plurality of permanent magnets (26) circumferentially distributed with magnetically alternating poles, and wherein the rotor assembly (21) is fixed to the modified flange (15) so that the plurality of permanent magnets (26) cooperate with the plurality of induction coils (24)of the stator (22) of the generator (20).

4. Power supply system (1) according to any one of claims 1 to 3, comprising a battery for storing electrical energy generated by the generator (20).

5. Power system (1) according to any one of claims 1 to 4, wherein the stator enclosure (22) of the generator (20) comprises a sealing cover (28) with radial slots for air cooling.

6. Feeding system (1) according to any one of claims 1 to 5, wherein the bearings (33) extend along the rotation shaft (32) bounded on each side by a rotor (11) of the retarder (10).

7. Power system (1) according to any one of claims 1 to 6, wherein the rotor material (23) of the generator (20) comprises aluminum or non-magnetic stainless steel.

8. Power supply system (1) according to any one of claims 1 to 7, comprising a control module configured to act on the retarder (10).

9. Self-contained retarder comprising:
a retarder (10) comprising:
a first rotor (11) attached to a first side of a rotation shaft (32);
a second rotor (11) attached to a second side of the rotation shaft (32), the second side being opposite to the first side;
a stator (12) located between the first side and the second side, wherein the stator (12) is supported on bearings (33) coupled with the rotation shaft (32);
a power supply system (1) according to any one of claims 1 to 8, configured to supply electrical power to at least the retarder (10).

10. Method for making a retarder autonomous (10) of a vehicle comprising the following steps:
- mount a generator (20) between the retarder (10) and the cardan transmission (31), wherein the generator (20) is configured to supply electrical power and comprises a stator (22) and a rotor assembly (21), wherein the retarder (10) comprises two rotors (11) attached to a shaft (32) of rotation and a stator (12) located between the rotors (11), wherein the stator (12) is supported on bearings (33) coupled with the rotation shaft (32);
**characterized in that** assembling the generator (20) comprises the steps of:
- remove an original flange (35) securing the cardan transmission (31) of the vehicle to one side of the retarder (10);
- mount a modified flange (15) securing the cardan transmission (31) of the vehicle to one side of the retarder (10);
- assembling the stator (10) of the generator (20) to the stator (12) of the retarder (10) by means of a plurality of attachment arms (13) joining and supporting the stator (22) of the generator (20) to the stator (12) of the retarder (10);
- attach the rotor assembly (21) of the generator (20) to the modified flange (15) mounted on the retarder (10);
- mount a sealing cap (28) to the stator (22) of the generator (20);
- mount the cardan transmission (31) of the vehicle.
